Europäisches Patentamt

European Patent Office

Office européen des brevets

(19)

(11) **EP 1 163 503 B1**

(12) **EUROPÄISCHE PATENTSCHRIFT**

(45) Veröffentlichungstag und Bekanntmachung des Hinweises auf die Patenterteilung:
**27.08.2003 Patentblatt 2003/35**

(21) Anmeldenummer: **00916802.2**

(22) Anmeldetag: **06.03.2000**

(51) Int Cl.⁷: **G01N 21/35**, G01N 21/37

(86) Internationale Anmeldenummer:
**PCT/DE00/00746**

(87) Internationale Veröffentlichungsnummer:
**WO 00/054032 (14.09.2000 Gazette 2000/37)**

(54) **GASSENSOR UND VERFAHREN ZUM BETREIBEN EINES GASSENSORS**

GAS DETECTOR AND METHOD OF OPERATING A GAS DETECTOR

DETECTEUR DE GAZ ET PROCEDE PERMETTANT D'ACTIONNER UN DETECTEUR DE GAZ

(84) Benannte Vertragsstaaten:
**AT BE CH CY DE DK ES FI FR GB GR IE IT LI LU MC NL PT SE**

(30) Priorität: **08.03.1999 DE 19910104**
**17.05.1999 DE 19922590**

(43) Veröffentlichungstag der Anmeldung:
**19.12.2001 Patentblatt 2001/51**

(73) Patentinhaber: **ICB Institut für Chemo- und Biosensorik GmbH**
**48149 Münster (DE)**

(72) Erfinder:
• **SHULGA, Aleksandre**
**D-48149 Münster (DE)**
• **SCHMALE, Udo**
**D-45663 Recklinghausen (DE)**

(74) Vertreter: **Pfenning, Meinig & Partner GbR**
**Mozartstrasse 17**
**80336 München (DE)**

(56) Entgegenhaltungen:
EP-A- 0 503 511 EP-A- 0 512 535
DE-A- 3 043 332 US-A- 4 914 720
US-A- 5 608 219 US-A- 5 734 165

EP 1 163 503 B1

## Beschreibung

Infrarot-Gassensoren basieren auf dem Prinzip der selektiven Absorption von Infrarotstrahlung durch Gase. Das Wirkungsprinzip und die Betriebsweise von Infrarot-Gassensoren darf als bekannt vorausgesetzt werden.

Solche Gassensoren bestehen üblicherweise aus einer oder mehreren Strahlungsquellen, z.B. thermische Strahler wie Glühlampen, einer oder mehreren Absorptionsstrecken, wellenlängenselektierenden Elementen (selektive Strahlungsfilter wie z.B. Interferenzfilter) und einem oder mehreren Strahlungsdetektoren, die das optische Signal in ein elektrisches Meßsignal umwandeln. Eine Vielzahl solcher Detektoren ist aus dem Stand der Technik bekannt. Die am häufigsten benutzten Detektortypen sind unter anderem pyroelektrische, Halbleiter- (z.B. auf PbSe-Basis), thermophile und pneumatische Detektoren.

Eine weitere Ausführungsart basiert auf der Druckänderung aufgrund der Erwärmung der Gasmoleküle in dem Meßraum, die mittels eines Mikrofons aufgenommen wird. Die Erwärmung wird hervorgerufen, durch die Absorption der Strahlungsenergie der Strahlungsquelle(n) durch die zu detektierenden Meßgasmoleküle. Eine dem Stand der Technik entsprechende Ausführung ist in dem Patent DE 195 25 703 A1, offenbart.

So lehrt die US 5,608,219 eine Vorrichtung zur Detektion von wenigstens einem Gas mit einer Absorptionsbande in Infrarot, bestehend aus einer Zelle, die die zu untersuchende Gasprobe enthält, einer Infrarot-Strahlungsquelle, einer Stromversorgung für die Strahlungsquelle, einem Infrarot-Strahlungssensor und einer Meßwert-Auswerteeinheit, die an den Sensor befestigt ist.

Die EP 512 535 lehrt einen tragbaren Kohlendioxid-Monitor, bei dem das Kohlendioxid durch nichtdispersive Infrarot-Messungen bestimmt wird.

Die EP 503 511 lehrt eine Vorrichtung zur analytischen Bestimmung von Kohlendioxid und Wasser durch Infrarot-Analytik. Der Gasanalysator enthält dabei eine Strahlungsquelle, eine Proben- und Referenzdurchflußzelle, einen Detektor und einen Gasanschluß.

Die US 5,734,165 beschreibt einen Infrarot-Photometer, das in einem kompakten Gehäuse integriert ist, in dem eine Infrarot-Strahlungsquelle mit einer Frequenz zwischen 0,01 und 10 Hz gepulst wird.

Die US 4,914,720 lehrt einen Gasanalysator, der auf der nicht-dispersiven IR-Photometrie beruht und mit dem verschiedene Gase in Gasmischungen bestimmt werden können.

In optischen Gassensoren wird die Strahlungsquelle üblicherweise kontinuierlich (in Kombination mit einem Chopper) oder periodisch mit einer Pulsspannung betrieben. In beiden Fällen wird üblicherweise das Signal mittels einer phasensensitiven Elektronik (Lock-In-Technik) bzw. eines RMS-Wandlers erfaßt.

Die Erfindung betrifft einen Infrarot-Gassensor mit einer Energieversorgungseinrichtung zum Betrieb mindestens einer Strahlungsquelle, beispielsweise einer Wärmestrahlungsquelle oder einer IR-Luminescence-Strahlungsquelle (z.B. Diode, Laserdiode, IR-Laser), mit Strom- oder Spannungsimpulsen, mit mindestens einem im Strahlengang angeordneten Meßraum mit mindestens einem ein elektrisches Meßsignal abgebenden Detektor und mit einer Schalteinrichtung zur Regelung der Pulsdauer der Strom- bzw. Spannungsimpulse. Die Erfindung betrifft weiterhin ein Verfahren zum Betreiben eines derartigen Sensors.

Bei einem derartigen, aus der DE 30 43 332 A1 bekannten Gassensor wird die Pulsdauer der Strahlungsquelle, einem Temperaturstrahler, in Abhängigkeit vom Maximalwert des Meßsignals eines Strahlungsdetektors am Ausgang des Meßwertaufnehmers gesteuert. Dabei wird vorgeschlagen, den Maximalwert aus dem Kurvenverlauf der Ansprechkurve bzw. des Meßsignals des Meßwertaufnehmers empirisch oder rechnerisch zu ermitteln und die Pulsdauer durch Unterbrechen der Energiezufuhr zum Temperaturstrahler derart zu steuern, daß der Maximalwert mit Sicherheit innerhalb der Pulsdauer liegt. Des weiteren wird vorgeschlagen, den Kurvenverlauf der Ansprechkurve mit einem Maximalwertdetektor zu überwachen, der bei Erreichen des Maximalwertes der Ansprechkurve die Energiezufuhr bzw. den Stromimpuls unterbricht. Mit diesem Gassensor läßt sich ein Puls-/Pausen-Verhältnis der Energiezufuhr von kleiner 1 und vorzugsweise von 0,1 bis 0,5 erreichen.

Der Erfindung liegt die Aufgabe zugrunde, einen gattungsgemäßen Gassensor zu schaffen, der einen reduzierten Stromverbrauch bei hoher Meßgüte aufweist.

Die Aufgabe wird in Bezug auf den Sensor durch die Merkmale des Patentanspruchs 1 und in Bezug auf das Verfahren durch die Merkmale des Anspruchs 8 gelöst. Die Unteransprüche zeigen vorteilhafte Weiterbildungen auf.

Erfindungsgemäß wird demgemäß die Schalteinrichtung so gesteuert, daß die Pulsdauer kleiner ist als die Zeitdauer bis das Meßsignal das Maximum bei $\tau_{MAX}$ erreicht hat. Dies kann dadurch erfolgen, indem die maximale Steigung des Detektorsignals

$$\left( \frac{dU_D(t)}{dt} \right)_{MAX}$$

als Meßwert herangezogen wird. Die maximale Steigung des Signals wird wesentlich schneller als dessen Maximalwert erreicht: $\tau' \ll \tau_{MAX}$. Daher kann die Einschaltzeit der Strahlungsquelle $\tau_0$ in diesem Meßverfahren wesentlich kürzer sein ($\tau' \leq \tau_0 \ll \tau_{MAX}$), als in allen bisherigen. Das dadurch realisierbare Puls-/Pausenverhältnis liegt unter 0,01.

Der Abstand zwischen einzelnen Messungen kann je nach Sensordesign und Anwendungsprofil zwischen wenigen Sekunden und mehreren Minuten gewählt werden, wodurch eine Betriebsdauer ohne Batteriewechsel (z.B. übliche AA Batterien) von mehr als einem halben Jahr erreicht werden kann.

Dieses erfindungsgemäße Verfahren wie auch die im Folgenden dargestellten erfindungsgemäßen Verfahren können sowohl mit einem Strahlungsdetektor als auch einem akustischen Detektor, wie z.B. einem Mikrofon, als Detektorelement durchgeführt werden. Dabei können auch gleichzeitig mit mehreren Detektoren, z.B. einem Strahlungsempfänger und einem Mikrofon mehrere Signale erzeugt werden, wobei für mindestens eines der beiden Signale oder auch für mehrere der Signale bzw. alle Signale die Messung erfindungsgemäß durchgeführt wird. Bei Erzeugung mehrerer Signale kann die Genauigkeit der Messung weiter verbessert werden.

Als Strahlungsquellen für IR-Strahlen eignen sich beispielsweise Glühlampen, thermische Dünnschichtstrahler, Leuchtdioden und dergleichen, die auch als gepulste IR-Strahlungsquellen eingesetzt werden können.

Eine andere Methode um die Einschaltzeit der Strahlungsquelle zu verkürzen, ist die Messung des Detektorsignals zu einer bestimmten Zeit $\tau$ nach dem Einschalten der Strahlungsquelle als Sensorsignal zu benutzen, wobei diese Zeit $\tau$ kleiner als die Zeit des Erreichens des Maximalwerts des Detektorsignals $\tau_{MAX}$ ist: $\tau < \tau_{MAX}$. Vorzugsweise liegt $\tau$ zwischen der Zeit des Erreichens des Maximalwerts der Steigung des Detektorsignals $\tau'$ und $\tau_{MAX}$; $\tau' \leq \tau < \tau_{MAX}$. Als Meßwert zum Zeitpunkt $\tau$ kann man sowohl den momentanen Wert des Detektorsignals $U_D(\tau)$ als auch den momentanen Wert dessen erster Ableitung benutzen

$$\left(\frac{dU_D(t)}{dt}\right)_{t=\tau}$$

Darüber hinaus ist es auch möglich, die Zeitdauer nach dem Einschalten des Strahlers in der ein bestimmtes Niveau des Detektorsignals U'' bzw. ein bestimmter Abstand vom Detektorsignal bei ausgeschaltetem Strahler (Offset) erreicht wird als Meßwert zu benutzen.

Die Zeitdauer bis zur Erreichung einer festgelegten Steigung des Detektorsignals kann ebenfalls als das Meßsignal benutzt werden.

Sehr vorteilhaft ist die Betriebsweise des Gassensors wenn die Maximalsteigung des Detektorsignals

$$\left(\frac{dU_D(t)}{dt}\right)_{MAX}$$

oder der Zeitpunkt in dem dieser Maximalwert erreicht wird $\tau'$ als Meßsignal benutzt wird. Hierbei kann die Maximalsteigung mit Hilfe eines Maximalwertdetektors ohne die Angabe des Meßzeitpunkts gemessen werden.

Den Zeitpunkt $\tau'$ kann man z.B. mit Hilfe eine Null-Durchgang-Detektors aus der zweiten Ableitung des Detektorsignals bestimmen.

Eine Messung des Integrals des Detektorsignals bis zu einem bestimmten Zeitpunkt $\tau$, z.B. bis zum Maximum der Steigung des Detektorsignals $\tau'$, ist eine weitere mögliche Meßmethode.

Vorzugsweise ist das ein Integral über einen Zeitintervall angefangen von dem Einschaltpunkt der Strahlungsquelle (t = 0) bis zu einem bestimmten Zeitpunkt $\tau$, der kleiner als die Pulsdauer ist $\tau < \tau_0$:

$$\int_0^\tau U_D(t)dt$$

Natürlich können auch mehrere der oben beschriebenen Methoden und Meßwerte (z.B.

$$\left(\frac{dU_D(t)}{dt}\right)_{MAX}$$

und $\tau'$) zur Erhöhung der Sensitivität bzw. der Fehlersicherheit miteinander kombiniert werden.

Die Erfindung betrifft weiterhin ein Verfahren zum Betreiben eines Infrarotgassensors, wie er vorstehend ausführlich erläutert worden ist.

Das erfindungsgemäße Verfahren wird so durchgeführt, daß der Strom- bzw. Spannungsimpuls so abgeschaltet wird, daß die Pulsdauer kleiner als die zur Erreichung des Maximums ($\tau_{MAX}$) des Meßsignals des/ der Strahlungsempfänger bzw. des akustischen Detektors benötigte Zeitdauer ist. Somit wird der Strom- bzw. Spannungsimpuls nach einer Zeit t = $\tau$ abgeschaltet, wobei $\tau$ zwischen t = 0 des Strom- bzw. Spannungsimpulses und $\tau_{MAX}$ liegt. Ganz besonders bevorzugt ist es hierbei, wenn der Strom- bzw. Spannungsimpuls beim Maximalwert der 1. Ableitung des Meßsignals innerhalb der Zeitdauer abgeschaltet wird. Aber auch alle vorstehend bei dem Sensor erläuterten Ausführungsformen können beim erfindungsgemäßen Verfahren benutzt werden.

Das erfindungsgemäße Verfahren hat noch weitere Vorteile. So ist es mit dem erfindungsgemäßen Verfahren auch möglich, auf verschiedene Art und Weise die Gaskonzentration zu ermitteln. So kann die Gaskonzentration bestimmt werden aus dem Wert der 1. Ableitung des Meßsignals zu einem bestimmten Zeitpunkt $\tau_{meß}$, der kleiner als die Zeitdauer ist oder bei einem Wert der N. Ableitung (N>1) des Meßsignals zu einem bestimmten Zeitpunkt $\tau_{meß}$, der kleiner als die Zeitdauer ist. Die Gaskonzentration kann weiter bestimmt werden aus dem Wert des Integrals des Meßsignals über ein Zeitintervall, angefangen von dem Einschaltzeitpunkt t = 0 bis zu einem bestimmten Zeitpunkt $\tau_{meß}$, der kleiner als die Zeitdauer ist. Auch die 1. Ableitung kann für die Bestimmung der Gaskonzentration verwendet werden. Weitere bevorzugte Ausführungsformen zur Bestimmung der Gaskonzentration sind in den Ansprüchen 16 bis 19 angegeben.

Das erfindungsgemäße Verfahren kann auch eingesetzt werden, wenn die Zeitkonstante des Detektors größer ist als die Zeitkonstante der benutzten Strahlungsquelle. Es umfaßt weiterhin Meßverfahren und hierzu geeignete Meßanordnungen, bei denen das gaskonzentrationsabhängige Meßsignal vor dem Erreichen des Maximums des Detektorsignals ermittelt wird. Insbesondere kann die Pulslänge der zum Betrieb der Strahlungsquelle angelegten Spannung an die Strahlungsquelle so kurz gehalten werden, daß das Maximum des Detektorsignals nicht erreicht wird. Denn häufig wird der kinetische Verlauf des Detektorausgangssignals, z.B. im Falle von pyroelektrischen Detektoren, stärker durch die Eigenschaften wie beispielsweise die Zeitkonstante des Detektors selbst bestimmt als durch die Eigenschaften der Strahlungsquelle.

Im folgenden werden einige Beispiele des erfindungsgemäßen Verfahrens des erfindungsgemäßen Gassensors beschrieben werden. Es zeigen:

Figur 1      einen typischen Signalverlauf für einen pyroelektrischen Strahlungsdetektor;

Figur 2      einen prinzipiellen Signalverlauf eines pyroelektrischen Detektors bei gepulster Strahlungsquelle;

Figur 3      eine Ableitungsschaltung;

Figur 4      eine Summierschaltung;

Figur 5      die Darstellung einer Summiermessung;

Figur 6      eine Kalibrationskurve eines IR-$CO_2$-Sensors;

Figur 7      die Abhängigkeit des Maximalwertes der Ableitung eines Sensorsignals eines IR-$CO_2$-Sensors in Abhängigkeit von der Einschaltdauer der Strahlungsquelle und

Figur 8      den Verlauf der Ableitungen des Sensorsignals eines pyroelektrischen Detektors für sehr kurze Einschaltzeiten.

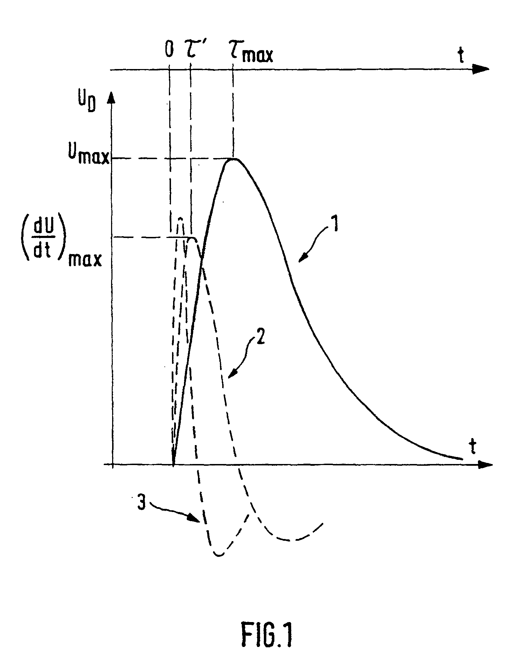

In Figur 1 ist ein typischer Signalverlauf für einen Strahlungsdetektor, hier einen pyroelektrischen Detektor, dargestellt.

Hierbei wurde zum Zeitpunkt t = 0 die Strahlungsquelle eingeschaltet. Die Kurve 1 gibt den Verlauf des Ausgangssignals des Detektors (minus Offset) wieder. Die Kurven 2 und 3 zeigen den Verlauf der ersten bzw. der zweiten Ableitung.

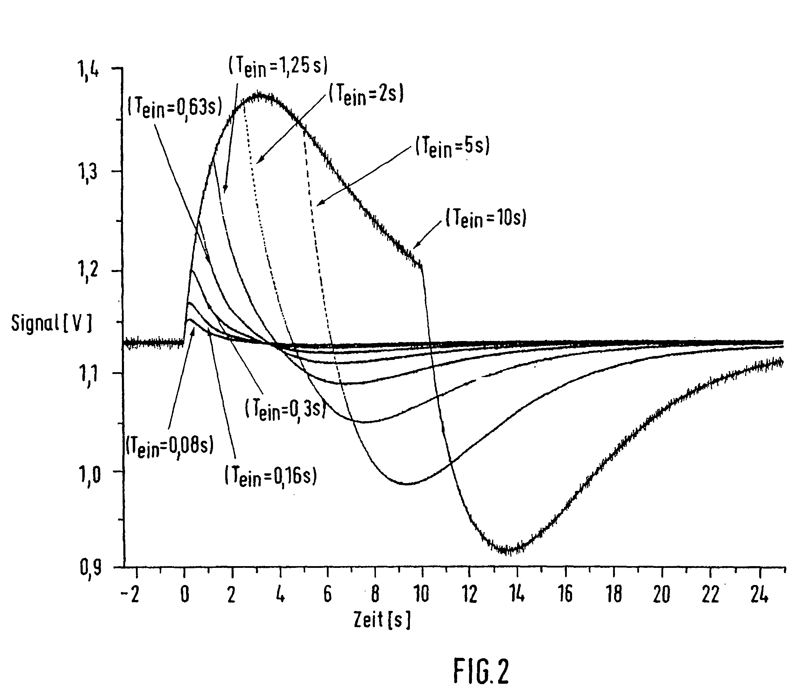

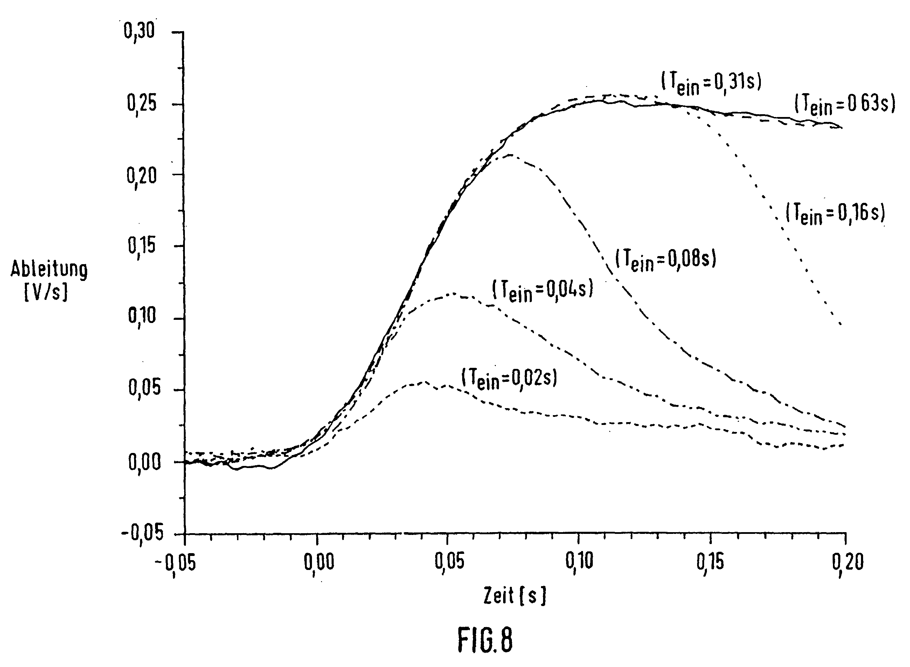

Figur 2 zeigt den prinzipiellen Signalverlauf eines pyroelektrischen Detektors(Murata IRA410 QW1), der der Strahlung einer gepulsten Strahlungsquelle (VCH T1 5 V, 60 mA) ausgesetzt wird. Dabei wird in Figur 2 eine Kurvenschar dargestellt, wobei als Parameter die Gesamteinschaltdauer der Strahlungsquelle verwendet wird. In Figur 2 ist zu erkennen, daß das Ausgangssignal des pyroelektrischen Detektors als Reaktion auf das Einschalten einer Strahlungsquelle bis zum Erreichen seines Maximums ca. 2,5 Sekunden benötigt. Der Maximalwert der ersten Ableitung des Detektorsignals wird allerdings schon nach ca. 120 Millisekunden erreicht (vgl. unten, Figur 8). Wird also der Maximalwert der ersten Ableitung zur Bestimmung des Sensorsignals verwendet, so kann die Strahlungsquelle bereits viel früher ausgeschaltet werden, so daß sich auch der Energieverbrauch der Strahlungsquelle erheblich verringert. Zudem sinkt das Detektorsignal nach einem so kurzen Strahlungspuls sehr viel schneller auf sein normales Niveau, wodurch auch höhere Abtastraten ohne eine signifikante Erwärmung des Sensors und somit ohne eine Aufwärmzeit des Sensors verwendet werden können.

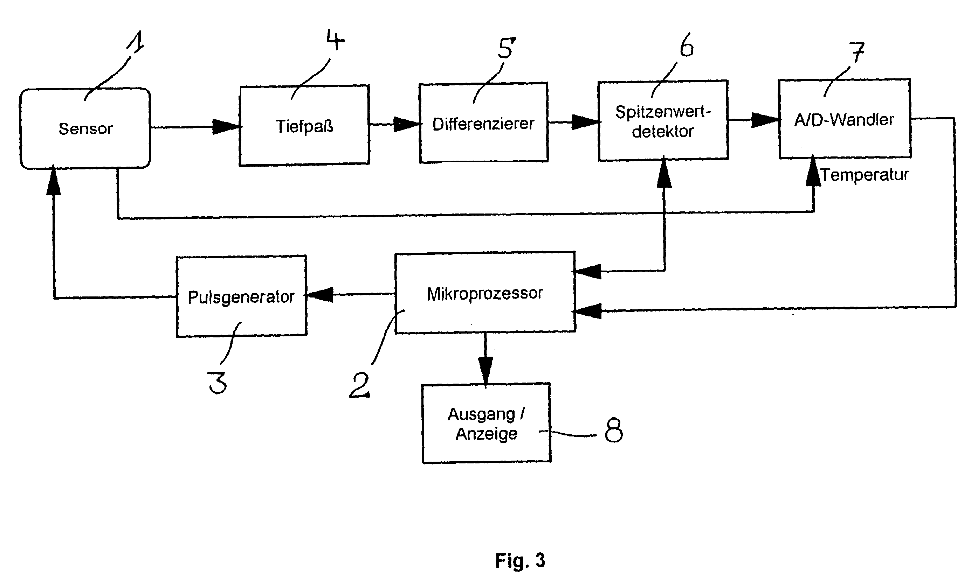

Figur 3 zeigt eine Ableitungsschaltung, mit der der Maximalwert der Ableitung des Sensorsignals erfaßt werden kann. Bei dieser Ableitungsschaltung steuert ein Mikroprozessor 2 einen Pulsgenerator 3 derart, daß dieser die Strahlungsquelle eines Sensors 1 für eine definierte Zeit einschaltet. Diese Zeit kann entweder fest eingestellt sein oder von einer Rückmeldung eines Spitzenwertdetektors 6 an den Mikroprozessor 2 abhängen. Der Sensor 1 erzeugt ein Meßausgangssignal mittels eines Strahlungsdetektors. Dieses Ausgangssignal durchläuft einen Tiefpaß 4 um höherfrequentes Rauschen zu unterdrücken und einen Differenzierer 5, um das Meßausgangssignal elektronisch zu differenzieren. Dieses Signal wird in einen Spitzenwertdetektor 6 gegeben, der den Spitzenwert der Ableitungen speichert und ggf., wie oben beschrieben, dem Mikroprozessor 2 eine Rückmeldung über das Erreichen des Spitzenwertes sendet. Der durch den Spitzenwertdetektor erfaßte Ableitungsspitzenwert wird an einen Analog/Digital-Wandler 7 gegeben, der den anliegenden Maximalwert der Ableitung des Sensorsignales wandelt und mißt. Weiterhin wird von dem A/D-Wandler 7 das Signal eines im Sensor 1 enthaltenen Temperatursensors erfaßt. Beide Werte werden dann von dem A/D-Wandler 7 an den Mikroprozessor 2 gegeben. Dieser setzt daraufhin den Spitzenwertdetektor zurück und berechnet aus den gemessenen Werten mit Hilfe entsprechender Kalibrierfunktionen die Konzentration des zu messenden Gases. Das Ergebnis wird dann von dem Mikroprozessor 2 an einem Ausgang bzw. einer Anzeige 8 angezeigt.

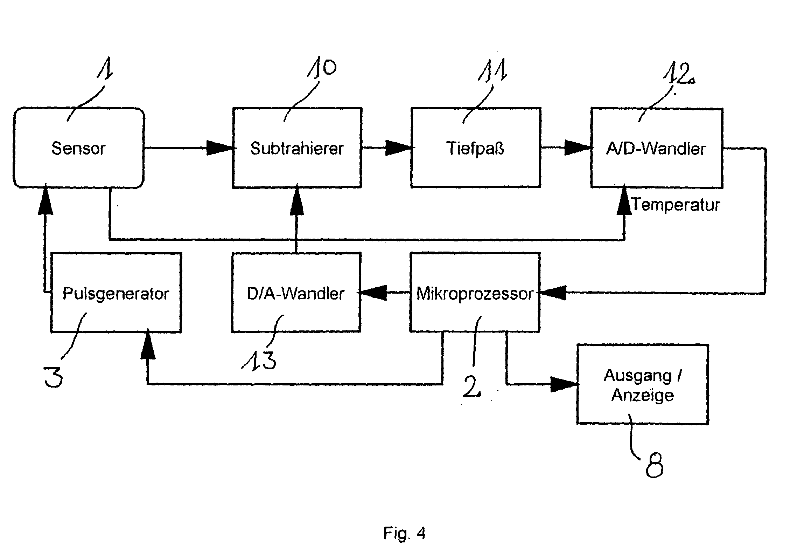

Figur 4 zeigt eine Summierschaltung, bei der ein Mikroprozessor 2 wie in Figur 3 einen Pulsgenerartor 3 antreibt, der eine Strahlungsquelle eines Sensors 1 für eine definierte Zeit einschaltet. Das Ausgangssignal vom Strahlungsdetektor des Sensors 1 wird an einen Subtrahierer 10 gegeben, indem ein eventuell vorhandener Offset des Sensorsignales vom Sensorsignal abgezogen wird. Die zu subtrahierende Spannung wird vom Mikroprozessor 2 über einen Digital/Analog-Wandler 13 dem Subtrahierer 10 vorgegeben. Das so um den Offset bereinigte Sensorsignal wird an einen Tiefpaß 11 gegeben, in dem es tiefpaßgefiltert wird und anschließend von einem Analog/Digital-Wandler 12 aufgenommen, in digitale Signale gewandelt und an den Mikroprozessor 2 übermittelt, welcher über eine bestimmte Anzahl von Werten summiert.

Falls der Offset des Sensorsignales temperaturabhängig ist, ist es weiterhin möglich, einen nach dem Subtrahierer 10 noch vorhandenen Offset vor dem Einschalten der Strahlungsquelle mit dem A/D-Wandler 12 zu erfassen. Dies erfolgt, indem der A/D-Wandler 12 vor dem Einschalten der Strahlungsquelle den tiefpaßgefilterten Offset des Sensorsignales aufnimmt, in digitale Signale wandelt und ebenfalls an den Mikroprozessor 2 übermittelt, welcher über eine bestimmte Anzahl von Werten summiert. Der A/D-Wandler 12 kann zudem den Ausgang des im Sensor 1 enthaltenen Temperatursensors messen und an den Mikroprozessor 2 übermitteln. Der Mikroprozessor 2 berechnet anschließend aus den gemessenen Werten mit Hilfe einer entsprechenden Kalibrierfunktion die Konzentration des zu messenden Gases.

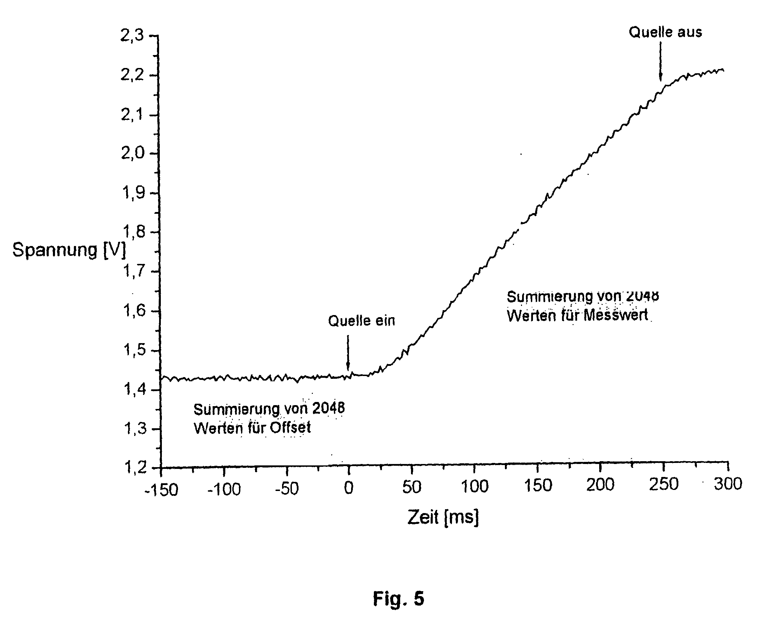

Figur 5 zeigt den Verlauf einer Summiermessung, bei der der Offset des Sensorsignals (Detektor: Murata IRA410 QW1) durch eine Summierung von 2048 Messungen eines A/D-Wandlers (MAX 1246) bestimmt wird. Der A/D-Wandler mißt dabei mit einer Rate von 16.000 Messungen pro Sekunde. Diese Messungen erfolgen, bevor die Lichtquelle (VCH T1 5 V, 60 mA) eingeschaltet wird. Nach Einschalten der Lichtquelle wird ca. 125 Millisekunden gewartet und anschließend werden wiederum 2048 Messungen durch den A/D-Wandler durchgeführt und von einem Mikroprozessor aufsummiert. Diese Werte bilden dann die eigentlichen Infrarot-Meßwerte. Zur Konzentrationsberechnung des zu bestimmenden Gases wird mit Hilfe einer Kalibrierfunktion die Differenz aus diesen Meßwerten und dem gemessenen Offset ausgewertet.

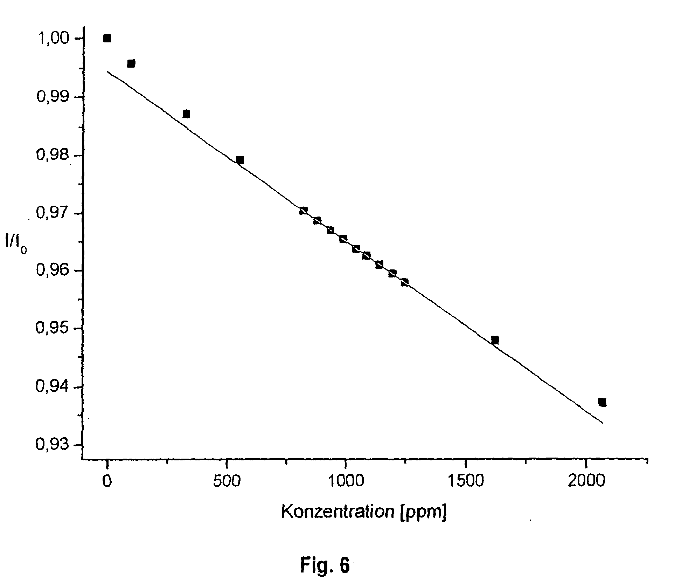

Figur 6 zeigt die Kalibrationskurve eines Infrarot-$CO_2$-Sensors (Detektor: Heimann LHi 807-TC-G2;

Quelle: VCH T1 5 V, 125 mA; Lichtweg 25 mm) im Bereich zwischen 0 ppm bis 2100 ppm $CO_2$. Die lineare Kalibrationsfunktion ist dabei für den Bereich zwischen 800 ppm bis 1200 ppm $CO_2$ optimiert. Diese Kalibrationskurve wurde mit einer Ableitungsschaltung gemäß Figur 3 aufgezeichnet. Es ist zu erkennen, daß die Signalintensität mit der $CO_2$-Konzentration korreliert und folglich ein sehr zuverlässiger $CO_2$-Sensor realisiert wurde.

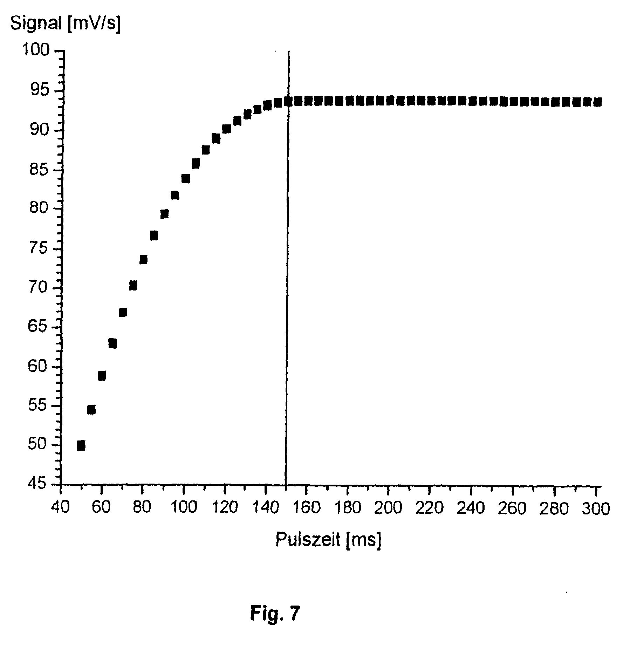

Figur 7 zeigt die Abhängigkeit des Maximalwertes der Ableitungen des Detektorsignals eines pyroelektrischen Infrarotdetektors (Heimann LHi 807-TC-G2) von der Einschaltdauer der Strahlungsquelle. Als Strahlungsquelle wurde hier eine Miniaturglühlampe (VCH T1 5 V, 60 mA) verwendet. Wie zu erkennen ist, steigt der Maximalwert der Ableitung im Bereich zwischen 40 Millisekunden und 150 Millisekunden an und ändert sich oberhalb von 150 Millisekunden Pulsdauer nicht mehr. Ein Einschalten der Strahlungsquelle für mehr als 160 Millisekunden erhöht damit nur den Energieverbrauch des Sensors, trägt aber zum erfindungsgemäßen konzentrationsabhängigen Ableitungs-Ausgangssignal nichts mehr bei.

Figur 8 zeigt den Verlauf der ersten Ableitung des Detektorsignals eines pyroelektrischen Detektors (Murata IRA410 QW1) bei sehr kurzen Einschaltzeiten. Figur 8 zeigt dabei eine Kurvenschar, wobei als Scharparameter die Einschaltzeit der Lichtquelle (VCH T1 5 V, 60 mA) verwendet wird. Diese beträgt zwischen 20 Millisekunden und 630 Millisekunden. Es ist zu erkennen, daß der Maximalwert der ersten Ableitung des Detektorsignals für eine Pulsdauer der Lichtquelle von 20 Millisekunden bis 160 Millisekunden ansteigt. Längere Pulsdauern als 160 Millisekunden führen zu keiner weiteren Erhöhung des Maximums der ersten Ableitung des Detektorsignals.

**Patentansprüche**

1.  Infrarot-Gassensor mit einer Energieversorgungseinrichtung zum Betrieb mindestens einer Strahlungsquelle mit Strom- oder Spannungsimpulsen, mit mindestens einem im Strahlengang angeordneten Meßraum, mit mindestens einem wellenlängenselektivierenden Element, mit mindestens einem ein elektrisches Meßsignal abgebenden Detektorelement und mit einer Schalteinrichtung zur Regelung der Pulsdauer der Strom- bzw. Spannungsimpulse,
    **dadurch gekennzeichnet,**
    **daß** die Schalteinrichtung Mittel zur Einstellung der Pulsdauer derart aufweist, daß der Strom- bzw. Spannungsimpuls so abgeschaltet wird, daß die Pulsdauer kleiner als die zur Erreichung des Maximums ($\tau_{max}$) des mindestens einen Meßsignals des mindestens einen Detektorelementes benötigte Zeitdauer ist.

**2.** Infrarot-Gassensor nach Anspruch 1, **dadurch gekennzeichnet, daß** das mindestens eine Detektorelement ein Strahlungsempfänger und/oder ein Druckwandler, insbesondere ein Mikrofon ist.

**3.** Infrarot-Gassensor nach mindestens einem der Ansprüche 1 oder 2, **dadurch gekennzeichnet, daß** die Abschaltung erfolgt, wenn ein bestimmter Meßsignalwert erreicht ist.

**4.** Infrarot-Gassensor nach mindestens einem der Ansprüche 1 bis 3, **dadurch gekennzeichnet, daß** die Abschaltung erfolgt, wenn ein bestimmter Wert der 1. Ableitung des Meßsignals erreicht ist.

**5.** Infrarot-Gassensor nach mindestens einem der Ansprüche 1 bis 4, **dadurch gekennzeichnet, daß** die Abschaltung erfolgt, wenn der Maximalwert der 1. Ableitung des Meßsignals erreicht ist.

**6.** Infrarot-Gassensor nach mindestens einem der Ansprüche 1 bis 5, **dadurch gekennzeichnet, daß** die Abschaltung erfolgt, wenn ein bestimmter Wert des Integrals des Meßsignals über einen Zeitintervall, angefangen von dem Einschaltpunkt t = 0 erreicht ist.

**7.** Infrarot-Gassensor nach mindestens einem der Ansprüche 1 bis 6, **dadurch gekennzeichnet, daß** die Schalteinrichtung so betrieben wird, daß sich ein Puls-/Pausenverhältnis kleiner als 0,01 einstellt.

**8.** Verfahren zum Betrieb eines Infrarot-Gassensors nach mindestens einem der Ansprüche 1 bis 7, **dadurch gekennzeichnet, daß** der Strom- bzw. Spannungsimpuls so abgeschaltet wird, daß die Pulsdauer kleiner als die zur Erreichung des Maximums ($\tau_{max}$) des Meßsignals des mindestens einen Detektorelementes benötigte Zeitdauer ist.

**9.** Verfahren nach Anspruch 8, **dadurch gekennzeichnet, daß** der Strom- bzw. Spannungsimpuls nach einer bestimmten Zeit t = $\tau$ abgeschaltet wird, wobei $\tau$ zwischen t = 0 des Strom- bzw. Spannungsimpules und $\tau_{max}$ liegt.

**10.** Verfahren nach Anspruch 8 oder 9, **dadurch gekennzeichnet, daß** der Strom- bzw. Spannungsimpuls beim Erreichen des Maximalwerts der 1. Ableitung des Meßsignals innerhalb der Zeitdauer abgeschaltet wird.

**11.** Verfahren nach mindestens einem der Ansprüche 8 bis 10, **dadurch gekennzeichnet, daß** zur Bestimmung der Gaskonzentration der Wert des Meßsignals zu einen bestimmten Zeitpunkt $\tau_{meß}$, der kleiner als die Zeitdauer ist, benutzt wird.

**12.** Verfahren nach mindestens einem der Ansprüche 8 bis 11, **dadurch gekennzeichnet, daß** zur Bestimmung der Gaskonzentration der Wert der 1. Ableitung des Meßsignals zu einem bestimmten Zeitpunkt $\tau_{meß}$, der kleiner als die Zeitdauer ist, benutzt wird.

**13.** Verfahren nach mindestens einem der Ansprüche 8 bis 12, **dadurch gekennzeichnet, daß** zur Bestimmung der Gaskonzentration der Wert einer N. Ableitung (N > 1) des Meßsignals zu einem bestimmten Zeitpunkt $\tau_{meß}$, der kleiner als die Zeitdauer ist, benutzt wird.

**14.** Verfahren nach mindestens einem der Ansprüche 8 bis 13, **dadurch gekennzeichnet, daß** zur Bestimmung der Gaskonzentration der Wert des Integrals des Meßsignals über einen Zeitintervall angefangen von dem Einschaltpunkt t = 0 bis zu einem bestimmten Zeitpunkt $\tau_{meß}$, der kleiner als die Zeitdauer ist, benutzt wird.

**15.** Verfahren nach mindestens einem der Ansprüche 8 bis 14, **dadurch gekennzeichnet, daß** zur Bestimmung der Gaskonzentration der Maximalwert der 1. Ableitung des Meßsignals benutzt wird.

**16.** Verfahren nach mindestens einem der Ansprüche 8 bis 15, **dadurch gekennzeichnet, daß** zur Bestimmung der Gaskonzentration mindestens einer der Zeitpunkte, bei dem ein bestimmter Wert des Meßsignals, der N.Ableitung (N $\geq$ 1) des Meßsignals oder des Integrals des Meßsignals erreicht wird, benutzt wird.

**17.** Verfahren nach mindestens einem der Ansprüche 8 bis 16, **dadurch gekennzeichnet, daß** zur Bestimmung der Gaskonzentration der Zeitpunkt, bei dem der Maximalwert der 1. Ableitung des Meßsignals erreicht wird, benutzt wird.

**18.** Verfahren nach mindestens einem der Ansprüche 8 bis 17, **dadurch gekennzeichnet, daß** zur Bestimmung der Gaskonzentration der Zeitpunkt des ersten Nulldurchgangs der 2. Ableitung des Meßsignals, benutzt wird.

**19.** Verfahren zum Betrieb eines Infrarot-Gassensors, **dadurch gekennzeichnet, daß** dasselbe Meßsignal zur Gewinnung mindestens zweier Auswerteergebnisse auf mindestens zwei verschiedene Verfahren, ausgewählt aus den Verfahren gemäß Ansprüchen 10 bis 18, ausgewertet wird und aus den mindestens zwei Auswerteergebnissen die Gaskonzentration bestimmt wird.

## Claims

1. Infrared gas sensor with a power supply for operating at least one radiation source with current or voltage pulses, with at least one measuring area disposed in the beam path, with at least one wavelength selecting element, with at least one detector element emitting an electrical measuring signal and with a switching device for regulating the pulse duration of the current or voltage pulses, **characterised in that** the switching device has means for setting the pulse duration so that the current or voltage pulse is switched off in such a manner that the pulse duration is shorter than the time required to reach the maximum ($\tau_{max}$) of the at least one measuring signal of the at least one detector element.

2. Infrared gas sensor according to Claim 1, **characterised in that** the at least one detector element is a radiation receiver and/or a pressure transducer, in particular a microphone.

3. Infrared gas sensor according to at least one of Claims 1 or 2, **characterised in that** switch-off is carried out when a specified measuring signal value is arrived at.

4. Infrared gas sensor according to at least one of Claims 1 to 3, **characterised in that** switch-off is carried out when a specified value of the first derivative of the measuring signal is arrived at.

5. Infrared gas sensor according to at least one of Claims 1 to 4, **characterised in that** switch-off is carried out when the maximum value of the first derivative of the measuring signal is arrived at.

6. Infrared gas sensor according to at least one of Claims 1 to 5, **characterised in that** switch off is carried out when a specified value of the integral of the measuring signal is arrived at over a time interval, commencing with switch-on point t = 0.

7. Infrared gas sensor according to at least one of Claims 1 to 6, **characterised in that** the switching device is operated in such a manner that a pulse/pause ratio of less than 0.01 is set.

8. Method for operating an infrared gas sensor according to at least one of Claims 1 to 7, **characterised in that** the voltage or current pulse is switched off in such a manner that the pulse duration is shorter than temporal duration required for reaching the maximum ($\tau_{max}$) of the measuring signal of the at least one detector element.

9. Method according to Claim 8, **characterised in that** the voltage or current pulse is switched off after a specified time t = $\tau$, where $\tau$ lies between t = 0 of the voltage or current pulse and $\tau_{max}$.

10. Method according to Claim 8 or 9, **characterised in that** the voltage or current pulse is switched off when arriving at the maximum value of the first derivative of the measuring signal within the temporal duration.

11. Method according to at least one of Claims 8 to 10, **characterised in that** for the purpose of determining the gas concentration the value of the measuring signal is used at a specified point in time $\tau_{mess}$, which is smaller that the temporal duration.

12. Method according to at least one of Claims 8 to 11, **characterised in that** for the purpose of determining the gas concentration the value of the first derivative of the measuring signal is used at a specified point in time $\tau_{mess}$ which is smaller than the temporal duration.

13. Method according to at least one of Claims 8 to 12, **characterised in that** for the purpose of determining the gas concentration the value of an N.derivative (N > 1) of the measuring signal is used at a specified point in time $\tau_{mess}$ which is smaller than the temporal duration.

14. Method according to at least one of Claims 8 to 13, **characterised in that** for the purpose of determining the gas concentration the value of the integral of the measuring signal is used over a time interval starting from switch-on point t = 0 to a specified point in time $\tau_{mess}$ which is smaller that the temporal duration.

15. Method according to at least one of Claims 8 to 14, **characterised in that** for the purpose of determining the gas concentration the maximum value of the first derivate of the measuring signal is used.

16. Method according to at least one of Claims 8 to 15, **characterised in that** for the purpose of determining the gas concentration at least one of the points in time is used at which a specified value of the measuring signal, the N.derivative (N ≥ 1) of the measuring signal or the integral of the measuring signal is arrived at.

17. Method according to at least one of Claims 8 to 16, **characterised in that** for the purpose of determining the gas concentration the point in time is used at which the maximum value of the first derivative of the measuring signal is arrived at.

18. Method according to at least one of Claims 8 to 17, **characterised in that** for the purpose of determining the gas concentration the point in time of the first zero pass of the second derivative of the measuring signal is used.

19. Method for operating an infrared gas sensor **characterised in that** the same measuring signal is evaluated for obtaining at least two evaluation results in at least two different methods, selected from the methods according to Claims 10 to 18, and the gas concentration is determined from the at least two evaluation results.

**Revendications**

1. Détecteur de gaz à infrarouge, comprenant un dispositif d'alimentation en énergie destiné à alimenter au moins une source radiante en impulsions de courant ou de tension, comprenant au moins une chambre de mesure disposée dans le passage des rayons, comprenant au moins un élément sélecteur de longueurs d'ondes, comprenant au moins un élément détecteur émettant un signal de mesure électrique, et un circuit de commande assurant la régulation de la durée d'impulsion des impulsions de courant ou de tension,
   **caractérisé en ce que**
   le circuit de commande comporte des moyens de réglage de la durée d'impulsion adaptés pour que l'impulsion de courant ou de tension soit coupée de façon telle que la durée d'impulsion soit plus petite que le temps nécessaire pour atteindre le maximum ($\tau_{max}$) dudit au moins un signal de mesure dudit au moins un élément détecteur.

2. Détecteur de gaz à infrarouge selon la revendication 1, **caractérisé en ce que** ledit au moins un élément détecteur est un récepteur de rayonnement et/ou un convertisseur de pression, en particulier un microphone.

3. Détecteur de gaz à infrarouge selon l'une au moins des revendications 1 ou 2, **caractérisé en ce que** la coupure intervient dès qu'une valeur de mesure prédéterminée a été atteinte.

4. Détecteur de gaz à infrarouge selon l'une au moins des revendications 1 à 3, **caractérisé en ce que** la coupure intervient dès qu'une valeur prédéterminée de la première dérivée du signal de mesure a été atteinte.

5. Détecteur de gaz à infrarouge selon l'une au moins des revendications 1 à 4, **caractérisé en ce que** la coupure intervient dès que la valeur maximale de la première dérivée du signal de mesure a été atteinte.

6. Détecteur de gaz à infrarouge selon l'une au moins des revendications 1 à 5, **caractérisé en ce que** la coupure intervient dès qu'une valeur prédéterminée de l'intégrale du signal de mesure, établie sur un intervalle de temps commençant au moment de mise en marche t=0, a été atteinte.

7. Détecteur de gaz à infrarouge selon l'une au moins des revendications 1 à 6, **caractérisé en ce que** le circuit de commande est exploité de manière qu'un rapport impulsion/pause inférieur à 0,01 s'établisse.

8. Procédé d'exploitation d'un détecteur de gaz à infrarouge selon l'une au moins des revendications 1 à 7, **caractérisé en ce que** l'impulsion de courant ou de tension est coupée de façon telle que la durée d'impulsion soit plus petite que le temps nécessaire pour atteindre le maximum ($\tau_{max}$) du signal de mesure dudit au moins un élément détecteur.

9. Procédé selon la revendication 8, **caractérisé en ce que** l'impulsion de courant ou de tension est coupée après un temps prédéterminé t=$\tau$, où $\tau$ est compris entre t=0 de l'impulsion de courant ou de tension et $\tau_{max}$.

10. Procédé selon la revendication 8 ou 9, **caractérisé en ce que** l'impulsion de courant ou de tension est coupée lorsque la valeur maximale de la première dérivée du signal de mesure est atteinte dans ledit temps.

11. Procédé selon l'une au moins des revendications 8 à 10, **caractérisé en ce que**, pour déterminer la concentration des gaz, on utilise la valeur du signal de mesure à un moment donné $\tau_{mes}$ qui est plus petit que ledit temps.

12. Procédé selon l'une au moins des revendications 8 à 11, **caractérisé en ce que**, pour déterminer la concentration des gaz, on utilise la première dérivée du signal de mesure à un moment donné $\tau_{mes}$ qui est plus petit que ledit temps.

13. Procédé selon l'une au moins des revendications 8 à 12, **caractérisé en ce que**, pour déterminer la concentration des gaz, on utilise la N$^{ième}$ dérivée (N>1) du signal de mesure à un moment donné $\tau_{mes}$ qui est plus petit que ledit temps.

14. Procédé selon l'une au moins des revendications 8 à 13, **caractérisé en ce que**, pour déterminer la concentration des gaz, on utilise la valeur de l'intégrale du signal de mesure, couvrant un intervalle de temps commençant au moment de mise en marche t=0 et allant jusqu'à un moment donné $\tau_{mes}$ qui est plus petit que ledit temps.

**15.** Procédé selon l'une au moins des revendications 8 à 14, **caractérisé en ce que**, pour déterminer la concentration des gaz, on utilise la valeur maximale de la 1$^{\text{ère}}$ dérivée du signal de mesure.

**16.** Procédé selon l'une au moins des revendications 8 à 15, **caractérisé en ce que**, pour déterminer la concentration des gaz, on utilise au moins un des moments où une valeur prédéterminée du signal de mesure, de la N$^{\text{ième}}$ dérivée (N$\geq$1) du signal de mesure, ou de l'intégrale du signal de mesure, est atteinte.

**17.** Procédé selon l'une au moins des revendications 8 à 16, **caractérisé en ce que**, pour déterminer la concentration des gaz, on utilise le moment où la valeur maximale de la 1$^{\text{ère}}$ dérivée du signal de mesure est atteinte.

**18.** Procédé selon l'une au moins des revendications 8 à 17, **caractérisé en ce que**, pour déterminer la concentration des gaz, on utilise le moment où la 2$^{\text{ième}}$ dérivée du signal de mesure passe par zéro pour la première fois.

**19.** Procédé d'exploitation d'un détecteur de gaz à infrarouge, **caractérisé en ce que** l'on analyse le même signal de mesure pour obtenir au moins deux résultats d'analyse, en utilisant au moins deux procédés différents, choisis parmi les procédés selon les revendications 10 à 18, et que l'on détermine la concentration des gaz à partir desdits au moins deux résultats d'analyse.

FIG.1

FIG.2

Fig. 3

EP 1 163 503 B1

Fig. 4

EP 1 163 503 B1

Fig. 5

Fig. 6

Fig. 7

FIG.8